# EUROPÄISCHE PATENTSCHRIFT

(11) **EP 1 044 858 B1**
(45) Veröffentlichungstag und Bekanntmachung des Hinweises auf die Patenterteilung: **02.11.2005**
(21) Anmeldenummer: 00107457.4
(22) Anmeldetag: 06.04.2000
(51) Int. Cl.: B60S 1/08, G01N 21/43

(54) **Verfahren zur Ermittlung von Korrekturfaktoren zur Kompensation der Temperaturdrift der Strahlstärke einer LED**
Method for getting a correction factor to compensate for the temperature drift in the intensity of the beams of an LED
Méthode pour obtenir un facteur de correction pour compenser la dérive de température dans l'intensité des faisceaux d'une LED

(30) Priorität: 16.04.1999 DE 19917239
(43) Veröffentlichungstag der Anmeldung: 18.10.2000
(73) Patentinhaber: Hella KGaA Hueck & Co., 59552 Lippstadt (DE)
(72) Erfinder: Buschmann, Peter, 59494 Soest (DE); Schmidt, Franz-Josef, 33154 Salzkotten (DE)

(56) Entgegenhaltungen:
- EP-A- 0 292 957
- EP-A- 0 618 555
- WO-A-96/09667
- DE-C- 4 202 121
- US-A- 4 433 238
- US-A- 4 700 064
- US-A- 5 266 792
- PATENT ABSTRACTS OF JAPAN vol. 014, no. 064 (P-1002), 6. Februar 1990 (1990-02-06) & JP 01 287445 A (MINOLTA CAMERA CO LTD), 20. November 1989 (1989-11-20)

## Beschreibung

Die Erfindung betrifft ein Verfahren zur Ermittlung von Korrekturfaktoren zur Kompensation der Temperaturdrift der Strahlstärke einer LED.

Für empfindliche Applikationen wie z.B. einem optisch arbeitenden Regensensor ist die Temperaturdrift der Strahlstärke der Infrarot-Sende-LED in Abhängigkeit von der Chip-Temperatur der LED eine sehr stark störende Größe. Der übliche Temperaturkoeffizient der Strahlstärke einer LED liegt in einer Größenordnung von ca. 0,5%/ °C. So wird bei einem optisch arbeitenden Regensensor durch die Drift, die durch eine Temperaturänderung von nur 1 °C verursacht wird, bereits die Größenordnung des auszuwertenden Nutzsignals erreicht.

Bei der in der DE 42 02 121 C1 beschriebenen Sensoreinrichtung wird zur Reduktion von Temperaturfehlem eine Heizvorrichtung vorgesehen, die die Sensoranordnung auf einem bestimmten Temperaturniveau hält. Eine solche Vorrichtung ist hinsichtlich Kosten, sowie Platz- und Verkabelungsaufwand relativ aufwendig, wobei zudem fraglich erscheint, ob eine einfache Heizvorrichtung ein vorgegebenes Temperaturniveau über einen längeren Zeitraum genau genug einhält. Eine zweckmäßige Weiterentwicklung wäre daher eine aktive Temperaturregelung mittels eines Temperatursensors, wodurch der Aufwand aber noch vergrößert würde.

Aus den Dokumenten US 4,700,064 und US 4,433,238 ist jeweils ein optisches Meßsystem mit einer LED als Lichtquelle bekannt. Aus diesen Dokumenten ist es bekannt, zur Kompensation der Temperaturdrift der Strahlstärke der LED Korrekturfaktoren zu ermitteln, wobei die Korrekturfaktoren aus der gemessenen Durchlassspannung der LED bei einem konstanten Referenzstrom abgeleitet werden.

Die Aufgabe der Erfindung besteht darin, das aus den Dokumenten US 4,700,064 und US 4,433,238 bekannte Verfahren zu verbessern, wobei insbesondere bei geringem Aufwand eine besonderes genaue Temperaturdriftkompensation ermöglicht werden soll.

Diese Aufgabe wird durch die Merkmale des Anspruches 1 gelöst.

Hierzu wird die LED in Sendepausen mit einem gegenüber dem Arbeitsstrom kleinerem Konstantstrom als Referenzstrom gespeist und die an der LED abfallende Spannung (Durchlaßspannung) erfaßt. LED's haben, wie alle Dioden, eine temparaturabhängige Durchlaßspannung; die Durchlaßspannung kann so eine Information über die momentane Chiptemperatur liefern.

Es ist aus den oben erwähnten Dokumenten bekannt, dass, aus dem bekannten, oder für die individuelle LED aufgenommenen Zusammenhang zwischen Chiptemperatur und Strahlstärke die Strahlkompensation vorgenommen wird. Ein großer Vorteil hierbei ist, daß die Durchlaßspannung bereits die Eigenerwärmung der LED durch den Sendestrom, die beträchtlich sein kann, mit berücksichtigt.

Es ist bekannt dass von der Chip-Temperatur der LED sowohl die Durchlaßspannung als auch die Strahlstärke der LED abhängen, und somit auch ein direkt erfaßbarer funktioneller Zusammenhang zwischen Durchlaßspannung und Strahlstärke besteht. Hierbei ist es nicht wichtig, welche Temperatur exakt vorliegt, weil ja die Durchlaßspannung und nicht die Temperatur als Referenz benutzt wird. Es genügt, eine ausreichend große Temperaturänderung zu erzeugen, um die Abhängigkeit des Korrekturfaktors von der Durchlaßspannung zu bestimmen.

Der Kompensationsbereich kann vorteilhafterweise z. B. für niedrigere Temperaturen durch Extrapolation der ermittelten Korrekturwerte erweitert werden.

Das bekannt Verfahren zur Kompensation der Temperaturdrift der Strahlstärke einer LED besteht auch hier darin, daß das Gerät, welches eine Meßanordnung mit einer LED aufweist, in einer Sendepause die LED mit einem konstanten Referenzstrom ansteuert, die Durchlaßspannung der LED erfaßt und den zur erfaßten Durchlaßspannung gehörenden Korrekturfaktor aus einem nichtflüchtigen Speicher ausliest. Die Kompensation der Strahlstärkedrift erfolgt dann auf der Grundlage des Korrekturfaktors, z.B rechnerisch mit Hilfe eines Mikroprozessors.

Der im nichtflüchtigen Speicher abgelegte funktionale Zusammenhang zwischen dem Korrekturfaktor und der Durchlaßspannung wird erfindungsgemäß folgendermaßen ermittelt:

Nach der Produktion der Meßanordnung (z.B. Regensensor) wird einmalig zur Abspeicherung einer Kennlinie, oder zumindest von Stützpunkten einer Kennlinie, die LED mit einem großen Strom oder einer anderen Heizquelle kurzzeitig aufgeheizt. In der Aufheizphase wird zwischendurch in gewissen Zeitabständen die Strahlstärke und Durchlaßspannung der LED bei unterschiedlichen Temperaturen mit konstantem Arbeitsstrom von einem Empfänger gemessen. Unmittelbar nach der jeweiligen Messung der Strahlstärke wird die zugehörige Durchlaßspannung der LED bei einem zweiten kleineren konstanten Referenzstrom erfaßt und der für diesen Kennlinienpunkt erforderliche Korrekturfaktor bestimmt. Die Erfassung der Strahlstärke bei einem, verglichen mit dem Arbeitsstrom der LED kleineren Referenzstrom hat den Sinn, den Einfluß durch mit der LED in Reihe liegenden Widerständen, wie z.B. Stromsensierwiderstände oder Kontaktwiderstände klein zu halten.

Die Korrekturwerte werden anschließend in einem nichtflüchtigen Speicher (z.B. EEPROM) abgelegt. Wird die gesamte Schaltung z.B. mit einem Gebläse aufgeheizt, können überdies die Korrekturfaktoren für die gesamten Schaltungsanordnung bestimmt werden.

## Patentansprüche

1. Verfahren zur Ermittlung von Korrekturfaktoren zur Kompensation der Temperaturdrift der Strahlstärke einer Infrarot-Sende-LED eines optisch arbeitenden Regensensors, wobei die Korrekturfaktoren aus der gemessenen Durchlaßspannung der im Regensensor angeordneten LED bei einem konstanten Referenzstrom abgeleitet werden, wobei
a) die LED auf unterschiedliche Temperaturwerte aufgeheizt wird,
b) an die LED ein konstanter, im Vergleich zum Arbeitsstrom kleinerer, Referenzstrom angelegt und die Durchlaßspannung der LED bei diesem Referenzstrom ermittelt wird,
c) für jeden Temperaturwert die Strahlstärke und die Durchlaßspannung der LED bei einem konstanten Arbeitsstrom bestimmt wird,
d) aus der jeweiligen Strahlstärke durch Vergleich mit einem Referenzstrahlsollwert ein Korrekturfaktor ermittelt wird,
e) der jeweilige Korrekturfaktor in Abhängigkeit von der jeweiligen in Schritt c) ermittelten Durchlaßspannung in einem nichtflüchtigen Speicher abgelegt wird,
f) Zwischenwerte durch Interpolation bestimmt werden.

2. Verfahren nach Anspruch 1, **dadurch gekennzeichnet, daß** zur Messung der Strahlstärke der LED, die zur LED gehörige Empfangs- und Auswerteeinrichtung benutzt wird und deren Temperatureffekte mitkompensiert werden.

3. Verfahren nach Anspruch 1, **dadurch gekennzeichnet, daß** der Kompensationsbereich durch Extrapolation der ermittelten Korrekturfaktoren erweitert wird.

4. Verfahren nach Anspruch 1, **dadurch gekennzeichnet, daß** das Aufheizen der LED mittels eines erhöhten Betriebsstroms durch die LED erfolgt.

5. Verfahren nach Anspruch 1, **dadurch gekennzeichnet, daß** das Aufheizen der LED durch eine externe Heizquelle erfolgt.

6. Verfahren nach Anspruch 5, **dadurch gekennzeichnet, daß** die externe Heizquelle neben der LED auch die zu der LED gehörige Schaltungsanordnung aufheizt.

## Claims

1. Method for determining correction factors for compensating a temperature drift of the beam intensity of an infrared transmitting LED of an optically operating rain sensor, and the correction factors are derived from the measured throughput voltage of an LED arranged in the rain sensor; and
a) the LED is heated to different temperature values;
b) to the LED is applied a constant reference current which is lower as compared to the operational current, and the throughput voltage of the LED is determined at this reference current;
c) the beam intensity and the throughput voltage of the LED at a constant working current is determined for each temperature value;
d) a correction factor is determined from a respective beam intensity by comparison with a nominal reference beam value;
e) in dependence of the throughput voltage as determined in respective step c), the respective correction factor is entered into a non-volatile store;
f) intermediate values are determined by interpolation.

2. Method according to Claim 1, **characterised in that** the receive and evaluation device associated with the LED is used for measuring the beam intensity of the LED, and its temperature effects are simultaneously compensated.

3. Method according to Claim 1, **characterised in that** the compensation range is extended by extrapolation of the detected correcting factors.

4. Method according to Claim 1, **characterised in that** the LED is heated up by means of an increased operating current through the LED.

5. Method according to Claim 1, **characterised in that** heating of the LED is carried out by an external heating source.

6. Method according to Claim 5, **characterised in that** the external heating source heats both the LED and the switching arrangement associated with the LED.

## Revendications

1. Procédé pour déterminer des facteurs de correction pour la compensation de la dérive de température de l'intensité de rayonnement d'une diode LED d'émission infrarouge d'un détecteur de pluie à fonctionnement optique, les facteurs de correction étant dérivés de la tension à l'état passant mesurée de la diode LED disposée dans le détecteur de pluie, pour un courant de référence constant, selon lequel
g) on chauffe la diode LED à différentes valeurs de température,
h) on applique à la diode LED un courant de référence constant, qui est inférieur au courant de travail, et on détermine la tension à l'état passant de la diode LED pour ce courant de référence,
i) pour chaque valeur de température, on détermine l'intensité du rayonnement et la tension à l'état passant de la diode LED pour un courant de travail constant,
j) à partir de l'intensité respective de rayonnement, on détermine, par comparaison à une valeur de consigne du rayonnement de référence, un facteur de correction,
k) on mémorise le facteur de correction respectif en fonction de la tension respective à l'état passant déterminée lors du pas c), dans une mémoire non volatile,
1) on détermine des valeurs intermédiaires par interpolation.

2. Procédé selon la revendication 1, **caractérisé en ce que** pour la mesure de l'intensité du rayonnement de la diode LED, on utilise le dispositif de réception et d'évaluation associé à la diode LED et on compense conjointement ses effets de température.

3. Procédé selon la revendication 1, **caractérisé en ce qu'**on étend la plage de compensation par extrapolation des facteurs de correction déterminés.

4. Procédé selon la revendication 1, **caractérisé en ce que** le chauffage de la diode LED s'effectue à l'aide d'un courant accru de fonctionnement traversant la diode LED.

5. Procédé selon la revendication 1, **caractérisé en ce que** le chauffage de la diode LED est réalisé au moyen d'une source externe de chauffage.

6. Procédé selon la revendication 5, **caractérisé en ce que** la source externe de chauffage chauffe non seulement la diode LED, mais également le montage associé à la diode LED.
